# EUROPEAN PATENT APPLICATION

(11) **EP 2 127 612 A1**
(43) Date of publication of application: **02.12.2009**
(21) Application number: 09251220.1
(22) Date of filing: 29.04.2009
(51) Int. Cl.: A61C 8/00

(54) **Abutment assembly device and dental prosthesis**

(30) Priority: 27.05.2008 US 127227
(71) Applicant: Mis-Implants Technologies Ltd, Shlomi 22832 (IL)
(72) Inventor: Baruc, Daniel, Nahariya 22441 (IL)
(74) Representative: Jehan, Robert

(57) **Abstract**

An abutment assembly device (115) comprises an abutment (122) for supporting a dental prosthesis (102). The abutment (122) includes a supporting surface (124) and an internal cavity with a rimmed opening, a hollow retainer wherein at least a portion of the retainer is flexible allowing that portion of the retainer to be inserted through the rimmed opening and snap into position retained by the rimmed opening. A screw for engaging the abutment assembly device (115) with an implant is provided, comprising a screw body and a screw head, wherein the screw head is wider than the screw body so that when the screw is inserted through the retainer and the retainer is retained by the rimmed opening, the screw head is retained by the retainer.

## Description

### FIELD OF THE INVENTION

The present invention relates to dental implants and an abutment assembly device for a dental implant or prosthesis. More specifically, the preferred embodiment relates to an inclined dental abutment assembly device.

### BACKGROUND OF THE INVENTION

A dental implant is used as a foundation for an artificial teeth construction. It is a small post usually made of titanium that acts as a root structure for holding a prosthetic tooth.

It is known in the art to attach a dental prosthesis (crown, bridge of other dental appliances) to a patient's jaw using a dental implant that is embedded in the patient's jaw. Between the dental implant and the prosthesis an abutment is placed, serving as a mediator. One end of the abutment is fixed to the implant, either internally or externally, while the other end is fixed to the prosthesis (normally inside the prosthetic tooth, in the form of an abutment)

A dental implant can be placed in the upper or the lower jaw bone, and after the bone has grown around the implant, the implant can hold a crown, a bridge or an over-denture just like roots hold natural teeth in place.

Dental implants which can replace a single tooth or a full arc of teeth were developed in 1952 by Sweden Professor Per-Ingvar Branemark who discovered that titanium could be structurally integrated into bones without soft tissue inflammation or rejection.

A key to implant success is the quantity and quality of the bone where the implant is to be positioned. In some patients, particularly in elderly people, the jaw bone may become thinner making it difficult to find a place for dental implants. One of the most difficult areas to successfully place dental implants due to insufficient bone quantity and quality and the close proximity to the sinus is the upper back jaw.

To overcome this difficulty, Paulo Malo from Nobel Biocare introduced the concept of "All-On-Four" which is a treatment solution based on four implants positioned on an elevated section of a retreating jawbone to obtain optimal positioning and support for a complete prosthetic denture. More specifically, the "All-On-Four" technique is based on tilting the two distal implants (typically of a total of four implants), which are implanted at the sides of the elevated section of the jawbone at an angle with respect to the jawbone and with respect to the remaining implants, so as to present an aligned and levelled foundation for a dental bridge or similar dental appliance.

Thus, Paulo Malo seems to have overcome the problem of insufficient bone quantity and quality with his "All On Four" technique. However, such technique has not yet gained worldwide use since it is based on using implant fixtures not compatible with dental units and parts commonly used in most dental clinics around the world.

Typically the implants used in conjunction with the "all-in-four" technique have a male connector, which is an external extension at the top of the implant on which the abutment is mounted and fixed. The corresponding connector of the abutment is therefore a female connector.

### SUMMARY OF THE INVENTION

The present invention seeks to provide an improved dental implant and abutment assembly device for a dental prosthesis.

The present invention also seeks to provide, in the preferred embodiments, an inclined abutment assembly device suitable for use in conjunction with the "all-in-four" technique.

The invention preferably also seeks to provide an inclined abutment assembly device with an intra-implant connector that may cooperate with implants having female connectors.

According to an aspect of the present invention, there is provided an abutment assembly device as specified in claim 1.

According to another aspect of the present invention, there is provided a dental prosthesis assembly including an abutment assembly as herein taught.

There is thus provided, in accordance with some embodiments of the present invention, an abutment assembly device that includes an abutment for supporting a dental prosthesis. The abutment includes a supporting surface and an internal cavity with a rimmed opening. The abutment assembly device further includes a hollow retainer wherein at least a portion of the retainer is flexible for allowing at least a portion of the retainer to be inserted through the rimmed opening of the abutment and snap into position retained by the rimmed opening. The abutment assembly device further includes a screw for engaging the abutment assembly device with an implant. The screw includes a screw body and a screw head, wherein the screw head is wider than the screw body so that when the screw is inserted through the retainer and the retainer is retained by the rimmed opening, the screw head is retained by the retainer.

Furthermore, according to embodiments of the present invention, the retainer may have a polygonal body and serves as an adaptor for engaging into an internal polygonal socket of the implant.

Furthermore, according to embodiments of the present invention, the polygonal body comprises a hexagonal body.

Furthermore, according to embodiments of the present invention, at least a portion of the retainer comprises flexible segmented rim.

Furthermore, according to embodiments of the present invention, the retainer comprises a ring.

Furthermore, according to embodiments of the present invention, the ring comprises an incomplete ring with a slit.

Furthermore, according to embodiments of the present invention, the internal cavity of the abutment comprises a peripheral internal groove.

Furthermore, according to embodiments of the present invention, the supporting surface of the abutment comprises a protruding flange.

Furthermore, according to embodiments of the present invention, the supporting surface of the abutment comprises a ball attachment.

Furthermore, according to embodiments of the present invention, the supporting surface is inclined with respect to the rimmed opening.

Furthermore, according to embodiments of the present invention, the support surface includes a top opening into a cavity through which the screw head is accessible to a screwdriver.

Furthermore, according to embodiments of the present invention, the cavity through which the screw head is accessible to a screwdriver includes internal threading for a screw for engaging with the prosthesis.

Furthermore, according to embodiments of the present invention, the top opening is elongated.

Furthermore, according to embodiments of the present invention, the circumference of the top opening is greater that the circumference of the internal threading.

### BRIEF DESCRIPTION OF THE DRAWINGS

In order to better understand the present invention, and appreciate its practical applications, the following Figures are provided and referenced hereafter. It should be noted that the Figures are given as examples only and in no way limit the scope of the invention.

Fig. 1 illustrates an isomeric view of an implant fixture with an abutment assembly device in accordance with embodiments of the present invention.

Fig. 2 illustrates a longitudinal side-view and partial cross-section of the implant fixture with an abutment assembly device shown in Fig. 1, in accordance with embodiments of the present invention.

Fig. 3A is an exploded view of parts of the abutment assembly device shown in Fig. 1, in accordance with embodiments of the present invention.

Fig. 3B is a side-view illustration of the abutment assembly device shown in Fig. 1, in an assembled state, in accordance with embodiments of the present invention.

Fig. 4 is a cross-sectional side-view illustration of the abutment assembly device shown in Fig. 1, in accordance with embodiments of the present invention.

Fig. 5 is an isomeric view illustration of an implant fixture with a dental abutment assembly device with a ring adaptor in accordance with embodiments of the present invention.

Fig. 6A is an exploded view illustrating parts of the abutment assembly device shown in Fig. 5 in accordance with embodiments of the present invention.

Fig. 6B is a side-view illustration of the abutment assembly device shown in Fig. 5, in an assembled state in accordance with embodiments of the present invention.

Fig. 7 is a cross-sectional side-view illustration of the abutment assembly device shown in Fig. 5 in accordance with embodiments of the present invention.

Fig. 8 is an isomeric view illustration of an implant fixture with a dental abutment assembly device with a ball attachment in accordance with embodiments of the present invention.

Fig. 9A is an exploded view illustration showing parts of the abutment assembly device shown in Fig. 8 in accordance with embodiments of the present invention.

Fig. 9B is a side-view illustration of the abutment assembly device shown in Fig. 8, in an assembled state, in accordance with embodiments of the present invention.

Fig. 10 is an isomeric view illustration of an implant fixture with a dental abutment assembly device which includes a ball attachment and a ring adaptor in accordance with embodiments of the present invention.

Fig. 11A is an exploded view illustrating parts of the abutment assembly device shown in Fig. 10 in accordance with embodiments of the present invention.

Fig. 11B is a side-view illustration of the abutment assembly device shown in Fig. 10, in an assembled state in accordance with embodiments of the present invention.

Fig. 12 illustrates a longitudinal side-view and partial cross-section of the implant fixture with an abutment assembly device shown in Fig. 10, in accordance with embodiments of the present invention.

Fig. 13 is a cross-sectional side-view illustration of the abutment assembly device shown in Figs. 10-12, in accordance with embodiments of the present invention.

### DETAILED DESCRIPTION OF THE PRESENT INVENTION

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the teachings herein.

According to embodiments of the present invention an inclined abutment assembly device comprises an intra-implant element, for instance a screw, which is designed to be fixedly fitted into a female connector of an implant fixture.

An abutment is provided on which a dental prosthesis such as a crown, a bridge or some other dental appliance is to be fixedly fitted. The abutment is fixedly connected to the intra-implant element in a manner that is described hereinafter. A hollow retainer, that acts as an adaptor, is used to firmly secure the abutment to the intra-implant element.

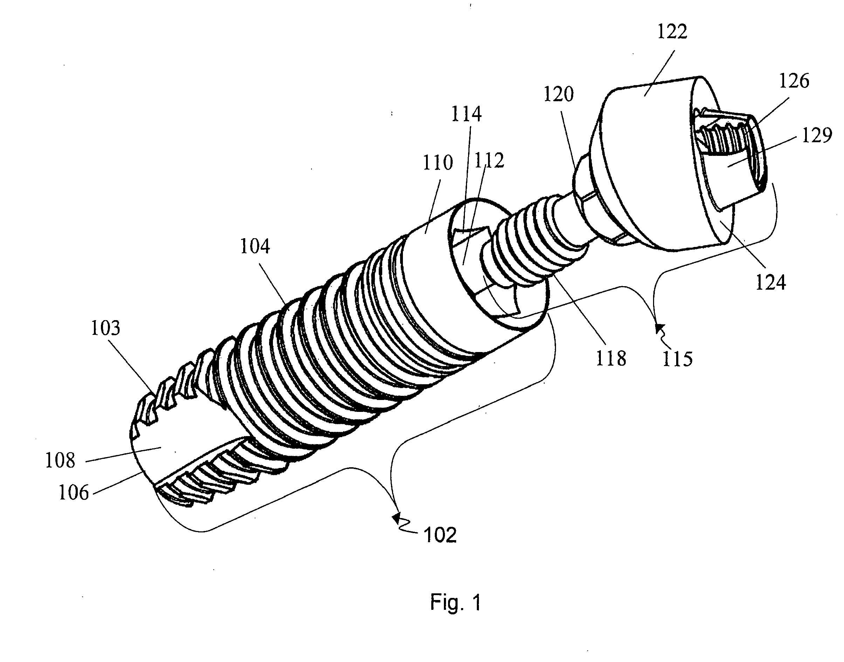

Fig. 1 illustrates an isomeric view of an implant fixture 102 with an abutment assembly device 115 in accordance with embodiments of the present invention As seen in the Figure, implant 102 is provided with an outer thread 104 to allow the implant to be screwed into the jawbone.

Distal end 103 of implant 102 is provided with one or more cutting edges 106 and one or more notches 108.

Both the cutting edges and the notches allow implant 102 to function as a self-tapering screw that is screwed into the jawbone tissue, the notches designed to accommodate bone and tissue debris.

Proximal end 110 of implant 102 has a smooth outside peripheral surface which is designed to remain above the bone (yet embedded in the surrounding soft tissue) and includes an inner threaded socket 112 with hexagonal upper portion 114.

Abutment assembly 115 includes intra-implant element (screw 118), a hollow retainer with a polygonal body, for example a hexagonal body referred to as hexagonal adaptor 120 and abutment 122. Thus, when fixing abutment assembly 115 to implant 102, polygonal (for example, hexagonal) upper portion 114 of inner socket 112 receives hexagonal adaptor 120, and thus prevents angular displacement between abutment assembly and implant.

The hexagonal shape of the adaptor and the corresponding hexagonal socket allow aligning the abutment assembly in six different and distinct orientations with respect to the implant.

It should be mentioned that adaptors and sockets of various other shapes may be used as well.

As seen in Fig. 1, abutment 122 is designed in such a way that supporting surface 124 is inclined with respect to the main axis of implant 102.

In order to be able to screw abutment assembly 115 into implant 102 and to further attach a dental prosthesis over abutment 122 in an inclined orientation (facilitating levelling of supporting surface 124), abutment 122 includes a protruding flange 129 with two sockets one of which is threaded. The opening of these two sockets is slightly elongated and can be identified in Fig. 1 as top opening 126.

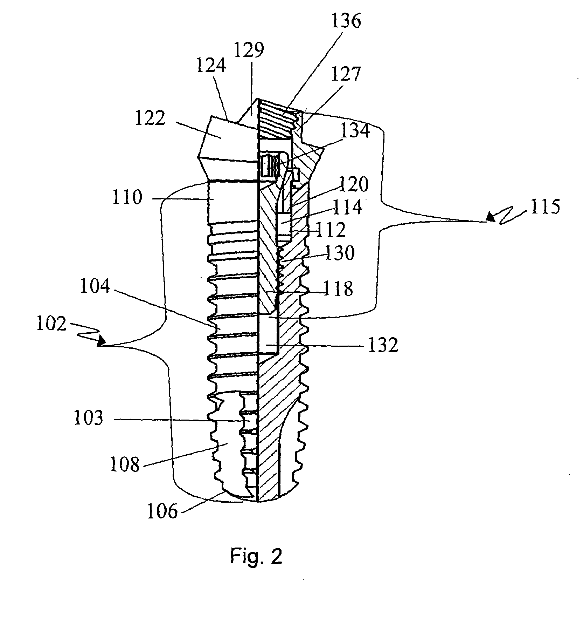

Fig. 2 illustrates a longitudinal side-view and partial cross-section of the implant fixture 102 with an abutment assembly device 115 shown in Fig. 1, in accordance with embodiments of the present invention.

Inner socket 112 of implant 102 includes hexagonal upper portion 114, threaded middle portion 130 and smoothly surfaced bottom portion 132.

To attach abutment assembly 115 to implant 102, screw 118 is screwed into threaded middle portion 130, and hexagonal adaptor 120 is received by hexagonal upper portion 114 of socket 112.

As noted earlier, abutment 122 is designed in such a way that supporting surface 124 is inclined with respect to the main axis of implant 102. Thus, in order to be able to screw abutment assembly 115 into implant 102 and also to further connect (for example, screw) additional parts to abutment 122 in the direction of inclined supporting surface 124, abutment 122 includes two sockets within internal cavity 127, for example a first socket 134 parallel to the main axis of implant 102 for receiving the screwdriver blades and screwing screw 118 into socket 112 (for example, for attaching abutment assembly 115 to implant 102) and a second threaded socket 136 inclined with respect to the main axis of implant 102 for attaching additional components to supporting surface 124 of abutment 122.

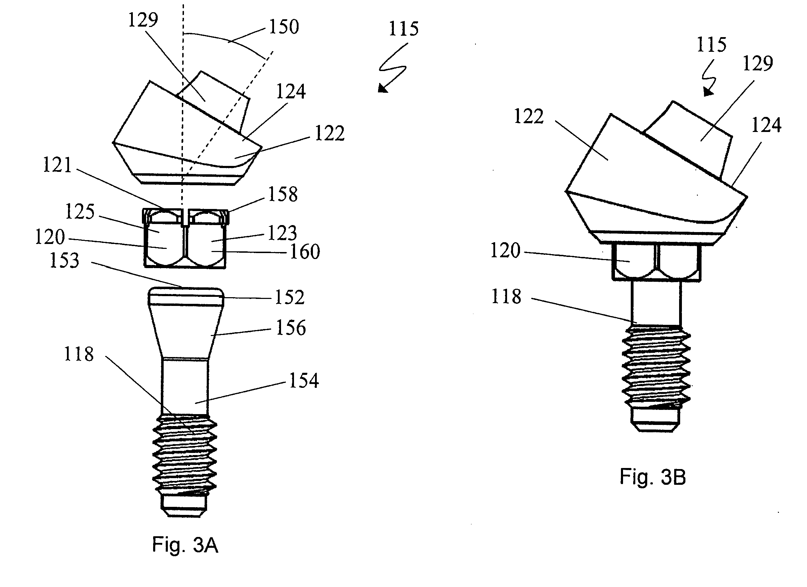

Fig. 3A is an exploded view of parts of the abutment assembly device 115 shown in Fig. 1, in accordance with embodiments of the present invention. Fig. 3B is a side-view illustration of the abutment assembly device 115 shown in Fig. 1, in an assembled state, in accordance with embodiments of the present invention. Abutment assembly 115 includes screw 118, hexagonal adaptor 120 and abutment 122.

As seen earlier as well as herein, abutment 122 is designed in such a way that supporting surface 124 is inclined with respect to the longitudinal axis of screw 118. The angle of inclination 150 may vary and it is noted that for "all-on-four" technique purposes typical inclination angles include 15, 17, 30 degrees and the like.

Hexagonal adaptor 120 is designed with flexible segmented rim 158 that is slightly wider than main hexagonal body 160 (with six facets). At least one slit (but typically two or more) is positioned across the circumference of flexible segmented rim 158 protruding outwardly, such as slit 121 that is situated in between facet 123 and facet 125.

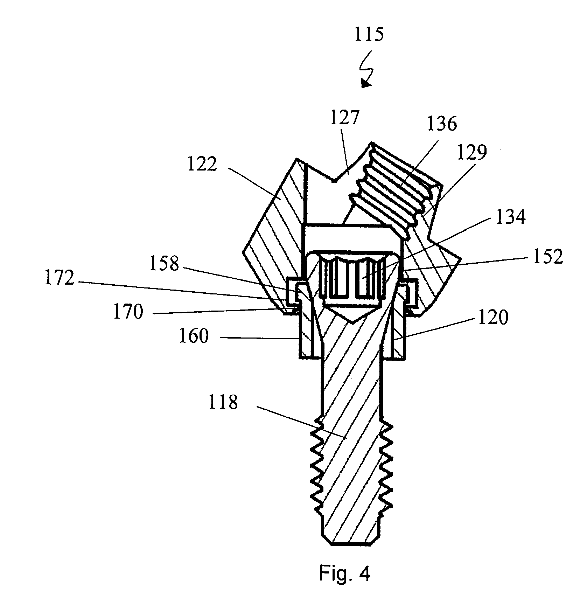

Having at least one slit across the circumference of flexible segmented rim 158 is essential for enabling the contraction of flexible segmented rim 158 when attempting to attach hexagonal adaptor 120 to abutment 122. The method by which hexagonal adaptor 120 is attached to abutment 122 is further elaborated in Fig. 4.

As seen in the Figure, screw 118 includes a bottom cylindrical portion 154 that is partially threaded, a middle portion 156 consisting sides which taper outwardly, and an upper cylindrical portion 152 having top surface area 153 possessing a diameter slightly greater than the inner diameter of flexible segmented rim 158 and slightly smaller than the outer diameter of flexible segmented rim 158 of hexagonal adaptor 12.

Fig. 4 is a cross-sectional side-view illustration of the abutment assembly device 115 shown in Fig. 1, in accordance with embodiments of the present invention.

As noted earlier and as seen herein, hexagonal adaptor 120 is designed to have flexible segmented rim 158 slightly thicker than bottom portion 160. In addition, flexible segmented rim 158 of hexagonal adaptor 120 includes at least one slit for enabling the retraction of flexible segmented rim 158 and the attachment of hexagonal adaptor 120 to abutment 122.

Also required for attaching hexagonal adaptor 120 to abutment 122 is rimmed opening 170 in abutment 122.

Thus, to attach screw 118 and hexagonal adaptor 120 to abutment 122, screw 118 in inserted through hexagonal adaptor 120 in such a way that upper cylindrical portion 152 of screw 118 extends beyond flexible segmented rim 158 of hexagonal adaptor 120.

Then, flexible segmented rim 158 of hexagonal adaptor 120 is pressed against rimmed opening 170 in abutment 122. As a result of the pressure applied across the circumference of flexible segmented rim 158 it contracts.

While contracted, flexible segmented rim 158 of hexagonal adaptor 120 snaps into position through rimmed opening 170 into peripheral internal groove 172 of internal cavity 127 of abutment 122.

Once flexible segmented rim 158 is caught inside peripheral internal groove 172, hexagonal adaptor 120 interlocks screw 118 within abutment 122.

As noted earlier, the hexagonal adaptor and socket pair illustrated in the previous Figures provide a non rotational firmly fastened structure. However, when some rotational freedom is desired or more specifically, when the desired structure should include an abutment that is coaxially rotatable about the longitudinal axis of implant 102, the hexagonal adaptor can be replaced by a hollow retainer with a circular body such as a flexible ring adaptor.

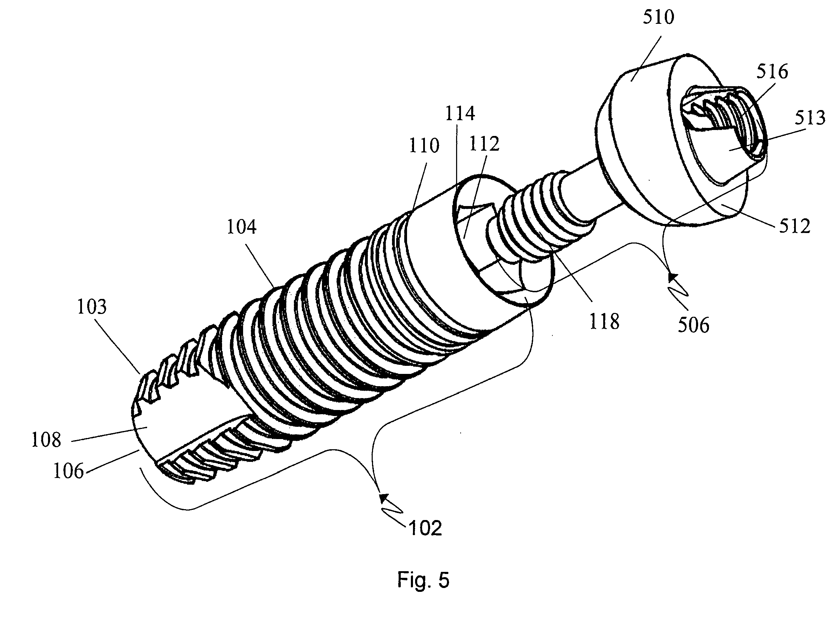

Fig. 5 is an isomeric view illustration of an implant fixture 102 with a dental abutment assembly device 506 with a ring adaptor in accordance with embodiments of the present invention.

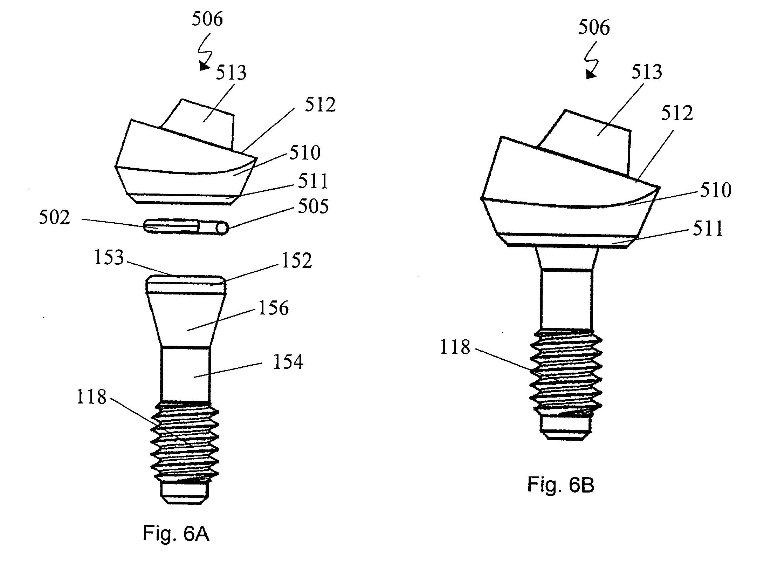

Abutment assembly device 506 includes screw 118, a ring adaptor (not shown in Fig. 5, see in Fig. 6A) and abutment 510 wherein the supporting surface 512 of abutment 510 is inclined with respect to the main axis of implant 102.

Abutment 510 includes a protruding flange 513 with two sockets identified by opening 516.

Fig. 6A is an exploded view illustrating parts of the abutment assembly device 506 shown in Fig. 5 in accordance with embodiments of the present invention.

Fig. 6B is a side-view illustration of the abutment assembly device 506 shown in Fig. 5, in an assembled state in accordance with embodiments of the present invention. Ring adaptor 502 is in fact an incomplete ring with slit 505 enabling the retraction of ring adaptor 502 when assembling abutment assembly device 506.

Abutment 510 includes a circular tapered bottom portion 511 so that when attaching abutment 510 to implant 102, screw 118 is screwed into threaded middle portion 130 of implant 102, and circular tapered bottom portion 511 is received by hexagonal upper portion 114 of socket 112.

Since abutment 510 has no polygonal connection with implant 102 (bottom portion 511 is circular) it may be rotated 360 degrees with respect to the shaft and firmly fixed in any desired orientation.

It should be noted that widened portion 153 of screw 118 has a diameter slightly greater than the inner diameter of ring adaptor 502 and at the same time slightly smaller than the outer diameter of ring adaptor 502.

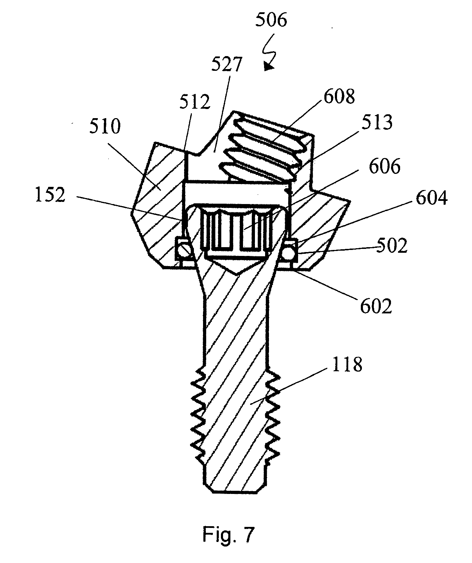

Fig. 7 is a cross-sectional side-view illustration of the abutment assembly device 506 shown in Fig. 5 in accordance with embodiments of the present invention.

As noted earlier, abutment 510 is designed in such a way that supporting surface 512 is inclined with respect to the main axis of the shaft. Thus, in order to be able to screw abutment assembly device 510 to the shaft and also to engage a dental prosthesis with inclined supporting surface 512, abutment 510 includes two sockets, a first socket 606 parallel to the main axis of the shaft and a second threaded socket 608 within internal cavity 527 inclined with respect to the main axis of the shaft.

To attach screw 118 and ring adaptor 502 to abutment 510, screw 118 in inserted through ring adaptor 502 in such a way that upper cylindrical portion 152 of screw 118 lies on the top surface of ring adaptor 502.

Then, ring adaptor 502 is pressed against rimmed opening 602, and as a result of the applied pressure, the slit of ring adaptor 502 renders the ring flexibility and allows ring adaptor 502 to snap into position through rimmed opening 602 into peripheral internal groove 604.

An inclined abutment assembly device may be designed to include a ball attachment. A ball attachment is mounted on top of the abutment and is used as a foundation for the construction of a dental prosthesis such as a crown or a bridge consisting of artificial teeth wherein a spherical internal cavity beneath the bridge clamps onto the ball attachment.

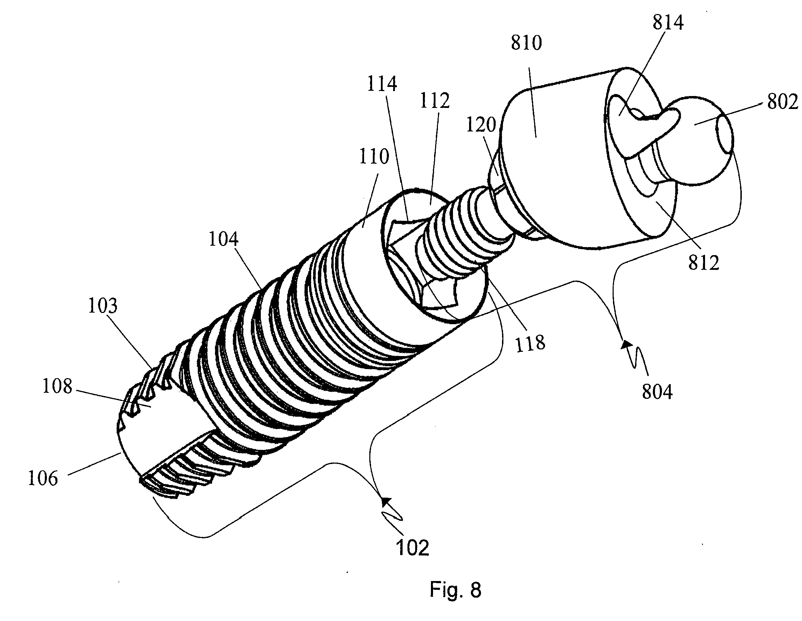

Fig. 8 is an isomeric view illustration of an implant fixture 102 with a dental abutment assembly device 804 with a ball attachment 802 in accordance with embodiments of the present invention.

Abutment assembly device 804 includes screw 118, hexagonal adaptor 120 and abutment 810 wherein supporting surface 812 of abutment 810 is inclined with respect to the main axis of implant 102. As seen, abutment 810 includes one socket positioned parallel to the main axis of implant 102 and being identified by opening 814 that is slightly elongated.

Ball attachment 802 is positioned over inclined supporting surface 812 of abutment 810, and thus, is also inclined with respect to the main axis of implant 102.

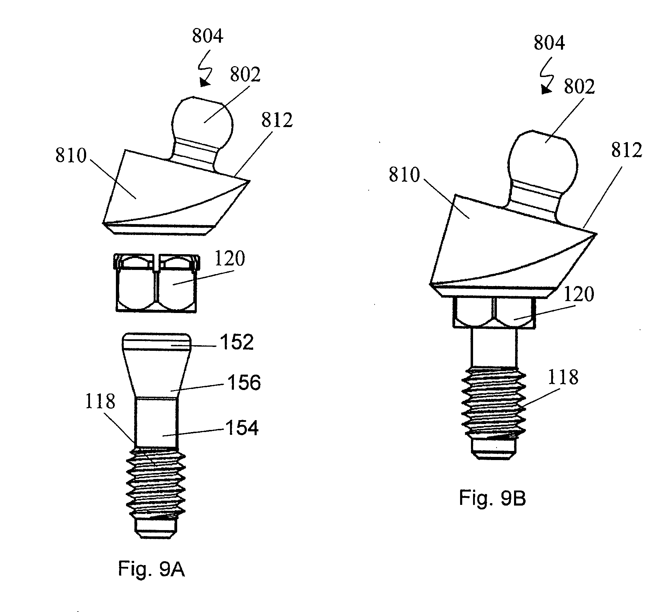

Fig. 9A is an exploded view illustration showing parts of the abutment assembly device 804 shown in Fig. 8 in accordance with embodiments of the present invention.

Fig. 9B is a side-view illustration of the abutment assembly device 804 shown in Fig. 8, in an assembled state, in accordance with embodiments of the present invention.

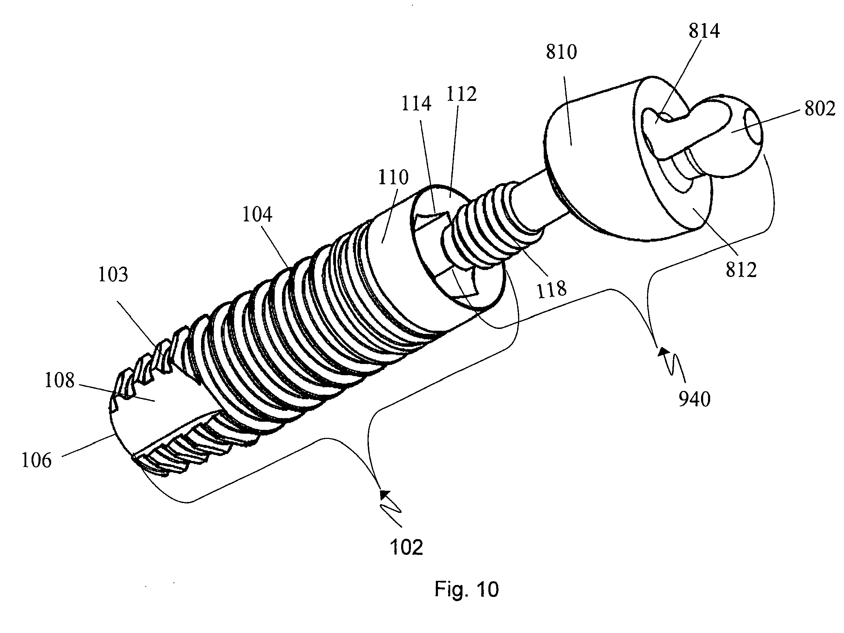

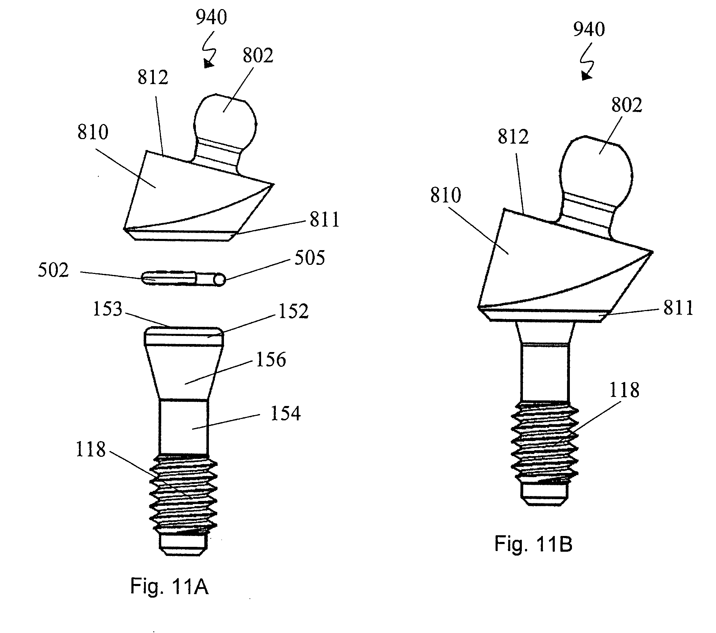

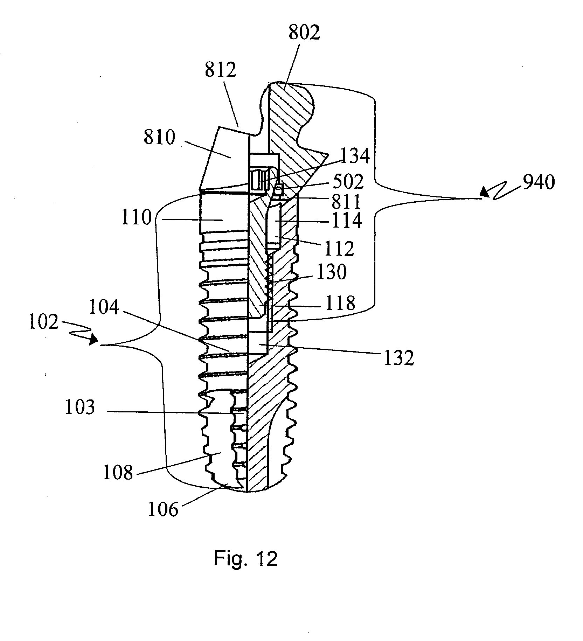

Fig. 10 is an isomeric view illustration of an implant fixture 102 with a dental abutment assembly device 940 which includes a ball attachment 802 and a ring adaptor (not shown in Fig. 10 see in Figs. 11, 12A and 12B) in accordance with embodiments of the present invention.

Abutment assembly device 940 includes screw 118, ring adaptor (see in Figs. 11, 12A and 12B) and abutment 810 wherein supporting surface 812 of abutment 810 is inclined with respect to the main axis of implant 102.

Abutment assembly device 940 also includes ball attachment 802 positioned over inclined supporting surface 812 of abutment 810.

Fig. 11A is an exploded view illustrating parts of the abutment assembly device 940 shown in Fig. 10 in accordance with embodiments of the present invention.

Abutment 810 includes a circular tapered bottom portion 811 which is received by socket 112 of implant when attaching abutment assembly device to implant 102.

Fig. 11B is a side-view illustration of the abutment assembly device 940 shown in Fig. 10, in an assembled state in accordance with embodiments of the present invention.

Fig. 12 illustrates a longitudinal side-view and partial cross-section of the implant fixture 102 with an abutment assembly device 940 shown in Figs. 10, 11A and 11 B, in accordance with embodiments of the present invention.

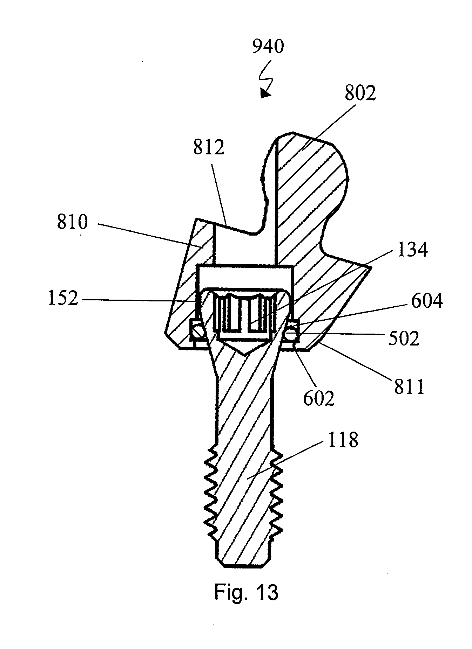

Fig. 13 is a cross-sectional side-view illustration of the abutment assembly device 940 shown in Figs. 10-12, in accordance with embodiments of the present invention.

According to some preferred embodiments of the present invention, the abutment assembly device can be provided in an assembled state (with the intra-implant element and the abutment already engaged via the adaptor), rendering the use of the abutment assembly device by the dentist or technician more comfortable and simple.

The abutment described in the present specification and accompanying figures is either snapped or screwed into the adjacent prosthesis, but it is noted that other attachment techniques (for example cementing) with which the abutment is attached to the prosthesis are also covered by the scope of the claims.

While embodiments of the present invention were described with reference to the "all-in-four" technique, it is understood that it may be also used for other dental restoration appliances and techniques, and the scope of the present invention, as claimed in the appended claims is not limited to the "all-in-four" technique.

While the invention has been described with respect to a limited number of embodiments, it will be appreciated that many variations, modifications and other applications of the invention may be made. Embodiments of the present invention may include other apparatuses for performing the operations herein. Such apparatuses may integrate the elements discussed, or may comprise alternative components to carry out the same purpose. It will be appreciated by persons skilled in the art that the appended claims are intended to cover all such modifications and changes as fall within the scope of the claims.

The disclosures in United States patent application number 12/127,227, from which this patent application claims priority, and in the abstract accompanying this application are incorporated herein by reference.

## Claims

1. An abutment assembly device including:
an abutment for supporting a dental prosthesis, the abutment including a supporting surface and an internal cavity with a rimmed opening;
a hollow retainer wherein at least a portion of the retainer is flexible allowing said at least a portion of the retainer to be inserted through the rimmed opening and snap into position retained by the rimmed opening;
a screw for engaging said abutment assembly device with an implant comprising a screw body and a screw head, wherein the screw head is wider than the screw body so that when the screw is inserted through the retainer and the retainer is retained by the rimmed opening, the screw head is retained by the retainer.

2. A device as claimed in claim 1, wherein the retainer has a polygonal body, and serves as an adaptor for engaging into an internal polygonal socket of the implant.

3. A device as claimed in claim 2, wherein the polygonal body comprises a hexagonal body.

4. A device as claimed in claim 1, 2 or 3, wherein said at least a portion of the retainer comprises flexible segmented rim.

5. A device as claimed in any preceding claim, wherein the retainer comprises a ring.

6. A device as claimed in claim 5, wherein the ring comprises an incomplete ring with a slit.

7. A device as claimed in any preceding claim, wherein the internal cavity comprises a peripheral internal groove.

8. A device as claimed in any preceding claim, wherein the supporting surface comprises a protruding flange.

9. A device as claimed in any preceding claim, wherein the supporting surface comprises a ball attachment.

10. A device as claimed in any preceding claim, wherein the supporting surface is inclined with respect to the rimmed opening.

11. A device as claimed in claim 10, wherein the support surface includes a top opening into a cavity through which the screw head is accessible to a screwdriver.

12. A device as claimed in claim 11, wherein the cavity through which the screw head is accessible to a screwdriver includes internal threading for a screw for engaging with the prosthesis.

13. A device as claimed in claim 12, wherein the top opening is elongated.

14. A device as claimed in claim 13, wherein the circumference of the top opening is greater that the circumference of the internal threading.

15. A dental prosthesis or implant assembly including an abutment assembly device according to any preceding claim.
